# EUROPEAN PATENT APPLICATION

(11) **EP 1 575 102 A1**
(43) Date of publication of application: **14.09.2005**
(21) Application number: 04005400.9
(22) Date of filing: 08.03.2004
(51) Int. Cl.: H01L 51/30, H01B 1/06

(54) **Electrical conductor based on proton conducting carbon nanotubes**

(71) Applicant: University&of&Basel, 4003 Basel (CH)
(72) Inventor: Meuwly, Markus, 9000 St. Gallen (CH); Zoete, Vincent, 6700 Strasbourg (FR)

(57) **Abstract**

Electrical conductor, which comprises at least one carbon nanotube, wherein at least one carbon nanotube is filled with a proton-conducting fluid, protons being conductible inside the nanotube by means of applied electrical voltage. In particular the invention relates to a carbon nanotube device, which comprises at least one support having a conductive element, a carbon nanotube, and a proton conducting fluid inside the nanotube, at least one of whose termini binds to said conductive element at a site, so that conduction between said conductive element and the interior of said nanotube is maintained.

## Description

The present invention relates to means by which to transport electrical charge in defined quantities (e.g. one unit) from one point in space to another, spatially defined point on a short (picosecond) time scale. This makes the invention relevant to chip technology in general and the assembly of integrated circuits (ICs) in particular. More particularly, the invention relates to a nanotube-based electrical conductor, a method to produce such a conductor, and use of such nanotube-based electrical conductors within electrical circuits and/or integrated circuits.

Without any doubt, it can be stated that integrated circuits are one of the most important inventions of the 20^{th} century. Before 1958 transistors had already become commonplace in devices ranging from radios to phones to computers, and at this time, the manufacturers were looking for something better, smaller and faster. Transistors were smaller than vacuum tubes, but for some of the newest electronics, they were still not small enough. However, there was a limit on how small you could make each transistor, since after it was made it had to be connected to wires and other electronics. The transistors were at that time already at the limit of what a man skilled in the art could ever handle by hand. One possibility was to find a way to make an entire circuit -the transistors, the wires, etc. -- in a single blow. If a miniature circuit could be created in just one step, all the parts could be made much smaller. In 1958 Jack Kilby, collaborator of Texas Instruments, had the idea of integrating all parts of a circuit, not just the transistor, on silicon. At the time, nobody was producing capacitors or resistors from semiconductors. Kilby's idea was that the entire circuit could be built from a single crystal -- making it smaller and much easier to produce. Today the most advanced circuits contain several hundred millions of components on an area of 1 cm². The transistors on these chips are around 90 nm (nanometers).

However, in the attempt to integrate even more transistors on a single chip, there are natural spatial limits which stop the assiduous trend towards faster and smaller devices in integrated circuit technology. The primary reason is that one rapidly approaches physical limits of factors influencing device characteristics as well as current methods of device fabrication. With the downscaling of the physical dimension of devices to sub 0.1 µm feature size, some physical phenomena become more pronounced and important. This leads to changes in manufacturing standards. Fluctuations that are acceptable for currently produced device dimensions can no longer be tolerated in submicron fabrication. Manufacturing equipment currently used is not be able to produce devices to the resolution required for deep submicron technology, and consequently changes in the production techniques are required. Today's IC manufacturing is complex: some 200 in-line manufacturing parameters influence the outcome of about ten major electrical characteristics. Certain combinations of apparently controlled manufacturing fluctuations can lead to non-workable integrated circuits (ICs), affecting production. In particular the limits in semiconductor technology comprise fundamental limits, such as e.g. thermodynamic limitations (energy, voltage, noise margin), electrodynamic limitations (speed, signal propagation), and quantum effects limitations in discrete atomic devices (very deep submicron), integrated circuits technology limits, such as e.g. MOS transistor second and third order effects (short channel, quantum effects), manufacturing problems (yield, lithography, economy, process deviations, low-k dielectrics and patterning techniques), circuit level limits, such as e.g. effects of process variations, interconnections, and system level limits, such as e.g. couplings (substrate), heat production and dissipation, reliability, testing. So, there are many obstacles and unsolved, partially connected/related problems as well as natural limits to stretching the performance of an IC by squeezing more and more transistors onto individual chips to increase overall performance. However, it can be said that the most fundamental challenge involves a thin layer of insulation, or dielectric film, that is an integral part of each transistor.

As mentioned, the microelectronics industry owes a great deal of its success to the existence of the thermal oxide of silicon, i.e., silicon dioxide (SiO₂). A thin layer of SiO₂ forms the insulating layer between the control gate and the conducting channel of the transistors used in most modern integrated circuits. As circuits are made more dense, all of the dimensions of the transistors are reduced ("scaled") correspondingly (see e.g. R. H. Dennard, F. H. Gaensslen, H.-N. Yu, V. L. Rideout, E. Bassous, and A. R. LeBlanc, "Design of Ion-Implanted MOSFETs with Very Small Physical Dimensions," *IEEE J. Solid State Circuits SC-9,* pp. 256-268, 1974) so that nowadays the SiO₂ layer thickness (tₒₓ) is 2 nm or less. Over the past decade, the oxide thickness has been decreasing quasi-exponentially, but clearly this trend must reach saturation at some point, since there are physical and practical limits on how thin an oxide film can be made. The essential physical limitations on gate insulator thickness, ignoring "extrinsic" concerns related to manufacturability and yield (e.g., pinhole formation and film uniformity), are related to the exponentially increasing gate current as tₒₓ is reduced, and the effect of this current on both the functionality and reliability of devices and circuits. The leakage current is controlled by quantum-mechanical tunnelling, either Fowler-Nordheim (FN) tunnelling at high fields, or, for applied bias less than about 3 V, by direct tunnelling. At a typical operating field of 5 MV/cm, the current density for FN tunnelling is <10-9 A/cm². However, for tₒₓ ≲4 nm, the direct tunnelling current increases exponentially by about one order of magnitude for every 0.2-0.3-nm reduction in oxide thickness. The gate leakage current causes increased power consumption and may affect device and circuit functionality. Thus, the leakage current imposes a practical limit on oxide thickness. A thickness of ~1.5 nm, corresponding to a leakage current of ~10 A/cm², is today viewed as a practical limit for SiO₂. A recent analysis claims that 0.8-nm SiO₂ is a lower limit in MOSFET applications, based on consideration of threshold voltage fluctuations when the resistance of the oxide becomes comparable to that of the gate metal. These limits are not fundamental, but depend on circuit and system design, as well as materials properties such as film uniformity and interface roughness. However, below tₒₓ ≈1 nm, overlap of the electronic wave functions of the silicon conduction bands may become large enough to effectively reduce the tunnelling barrier. Other performance limitations, e.g., the decreasing n-FET drive current observed for oxide thickness below 1.3 nm, may also represent limitations of fundamental physics.

The current flowing through an ultra thin gate oxide is not merely a nuisance parasitic, but also causes reliability problems by leading to long-term parameter shifts (wearout) and eventually to oxide breakdown. The impact on device design involves an engineering tradeoff between short-term and long-term performance. Oxide breakdown, on the other hand, is a sudden discontinuous increase in conductance, often accompanied by increased current noise. Breakdown is generally understood to be the result of a gradual and predictable build-up of defects such as electron traps in the oxide, but the precise point at which breakdown occurs is statistically distributed so that only statistical averages can be predicted. The rate of defect generation in the oxide is proportional to the current density flowing through it, and therefore the reliability margin for gate-oxide breakdown has been drastically reduced as a consequence of device scaling. At present, predicted reliability "limits" for the gate-oxide thickness range from less than 1.5 nm to 2.8 nm. Even if the smallest estimates were correct, tₒₓ ~ 1 nm will be needed for 60-70-nm gate lengths (90-nm lithography node) operating at ~1 V in order to meet the desired performance targets. The reliability of SiO₂ in microelectronics, i.e., the ability of a thin film of this material to retain its insulating properties while subjected to high electric fields for many years, has always been a concern and has been the subject of numerous publications over the last 35-40 years, ever since the realization that SiO₂ could be used as an insulating and passivating layer in silicon-based transistors. In a recent survey of nine manufacturers asked to rate seventeen different reliability-related technology constraints in order of importance, gate-dielectric reliability was the top concern overall and was ranked among the top five concerns by every manufacturer surveyed. This shows the importance of this problem. It is observed that the oxide wearout and breakdown mechanisms change as a function of voltage and oxide thickness. For the ultra thin oxides at lower voltages now being employed, a potentially non-destructive "soft" breakdown mode is also frequently observed. However, the true implications of oxide breakdown for the reliability of integrated circuits are still unclear; therefore, a proper modelling for predictions etc. is still difficult. To conclude, there are many obstacles and unsolved, partially interacting problems as well as natural limits in today's IC-design and IC-production, and meanwhile the industry keeps trying, by dealing with the aforementioned problems, to squeeze more and more transistors onto individual chips to increase overall performance.

It is important that, as integrated circuits become smaller, the structures for electrically connecting microscopic electronic devices become increasingly important. As mentioned, integrated circuits can today be made with hundreds of thousands of devices of submicron dimension requiring at least as many conductive interconnections among the devices and hundreds of interconnections with packaging leads. As the circuits become smaller and more complex, the difficulties of making sufficiently small, uniform metal wires and metal strips become increasingly a limitation on circuit design and performance. The standard gold wires used to bond IC pads to package leads are relatively bulky, limiting the minimum size of IC bonding pads, and the metal strips used to interconnect microdevices within an IC are subject to cross-sectional nonuniformities. Accordingly there is also a need for nanoscale connectors which provide high, uniform conduction.

Nanotubes, in particular carbon nanotubes, are well known in the state of the art. Carbon nanotubes are seamless cylinders composed of carbon atoms in a regular hexagonal arrangement, closed either on both ends by hemispherical endcaps (photos), or closed only on one end, or open on both ends. Able to be manufactured in either a single-walled (dubbed SWNT) or multiwalled (MWNT) configuration, each type of nanotube has a distinct set of material characteristics that makes it suitable for different target applications. For instance, individual SWNTs can function as either metallic conductors or semiconductors, while MWNT inevitably has a mixed suit of such properties, due to the alternating characteristics of its layered structure. Today, both SWNT and MWNT are being used as key components in the production of high*-strength composites, and advanced sensors, electronic and optical devices, catalysts, batteries and fuel cells. It is known, that SWNT are not only highly efficient conductors of electricity and heat, but have a tensile strength that is 100 times that of steel at only one-sixth the weight. Meanwhile, SWNT can have diameters ranging from 0.7 to 2 nm (nanometres), and MWNT can have diameters ranging from 10 to 300 nm. Individual nanotube length can be up to 20cm. In general, SWNTs boast a surface area of 1500m²/g, a density of 1.33-1.40 g/cm³, a demonstrated tensile strength greater than 65 GPa (Gigapascals; with predicted values as high as 200 GPa), a modulus of elasticity on the order of 1000 GPa, and a thermal conductivity of 2000 W/mK (some published works suggest values as high as 6000W/mK. Experiments show that SWNTs can withstand 10-30% elongation before breakage. In the state of the art, there are several technologies currently used to produce carbon nanotubes: (1) Arc discharge can produce either SWNT or MWNT, using a plasma-based process whose feedstock carbon comes from burning either a solid carbon electrode (for MWNT), or a composite of carbon and a transition-metal catalyst (for SWNT). (2) Pulsed-laser vaporization (PLV),which only makes SWNT, uses a high-power, pulsed Nd-YAG laser aimed at powdered graphite loaded with metal catalyst (a later variation of this process uses a continuous, high-energy CO₂ laser, focused on a composite, carbon-metal feedstock source). (3) Chemical vapour deposition (CVD) can be used to make either SWNT or MWNT, and produces them by heating a precursor gas and flowing it over a metallic or oxide surface with a prepared catalyst (typically a nickel, iron, molybdenum or cobalt catalyst). (4) In several gas-phase processes, such as a high-pressure carbon monoxide process, both SWNT and MWNT can be produced using a reaction that takes place on a catalyst flowing in a stream, rather than bonded to a surface.

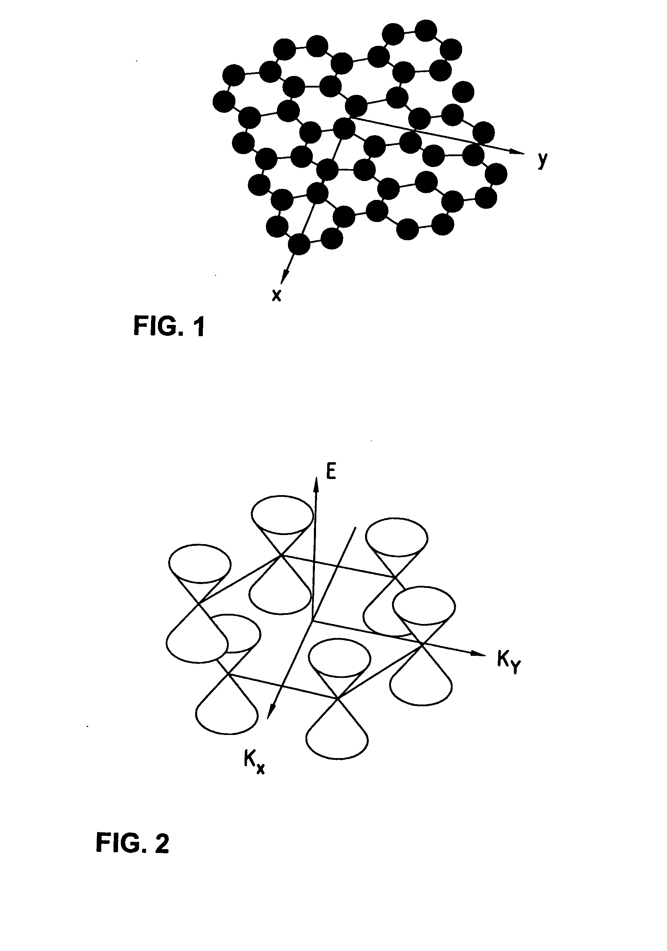

As mentioned, some nanotubes are semiconductors. It is therefore known in the state of the art that they can be used to construct devices that are one-dimensional analogues of metal-oxide-silicon field effect transistors, where the electrons move along the surface of a thin two-dimensional layer. Other nanotubes, in contrast, are nearly perfect metallic conductors. Both semiconducting- and metallic-nanotube devices have become important in technological applications. The remarkable electrical properties, used in the state of the art, stem from the unusual electronic structure of "graphene"- the 2-D material of which they are made. Graphene is simply a single atomic layer of graphite. Graphene has a two-dimensional "honeycomb" structure, made up of sp²-bonded carbon atoms (see Figure 1). Its conducting properties are determined by the nature of the electronic states near the Fermi energy, *E*_{*F*}, which is the energy of the highest occupied electronic state at zero temperature. The energy of the electronic states as a function of their wavevector, *k*, near *E*_{*F*}, is shown in Figure 2. This "band structure", which is determined by the way in which electrons scatter from the atoms in the crystal lattice is quite unusual. It is not like that of a metal, which has many states that freely propagate through the crystal at E_{F}. Nor is the band structure like that of a semiconductor, which has an energy gap with no electronic states near E_{F} due to the backscattering of electrons from the lattice. The band structure of graphene is instead somewhere in between these extremes. In most directions, electrons moving at the Fermi energy are backscattered by the atoms in the lattice, which gives the material an energy band gap like that of a semiconductor. However, in other directions, the electrons that scatter from different atoms in the lattice interfere destructively, which suppresses the backscattering and leads to metallic behaviour. This suppression only happens in the *y* direction and in the other directions that are π/3, 2π/3, π and 4π/3 from *y* (see Figure 2). Graphene is therefore called a "semimetal", since it is metallic in these special directions and semiconducting in the others. The consequence of this is that a nanotube can be either a metal or a semiconductor, depending on how the tube is rolled up.

In the state of the art, it is known that electrodes can be connected to either a single tube or a "bundle" of up to several hundred tubes by means of electron-beam lithography. The tubes can be attached to the electrodes in a number of different ways. One way is e.g. to make the electrodes and then dope the tubes onto them. Another is to deposit the tubes on a substrate, locate them with a scanning electron microscope or atomic force microscope, and then attach leads to the tubes using lithography. More advanced techniques are also known in the field to make device fabrication more reproducible and controlled. These include e.g. the possibility of growing the tubes between electrodes or by attaching the tubes to the surface in a controllable fashion using either electrostatic or chemical forces. The "source" and the "drain" electrodes allow the conducting properties of the nanotube to be used. In addition, a so-called "gate" is often used. The gate and the tube act like the two plates of a capacitor, which means that the gate can be used to electrostatically induce carriers onto the tube. A negative bias on the gate induces positive charges onto the tube, and a positive bias induces negative charges. Further it is known that semiconducting nanotubes can work as transistors. The tube can be turned "on" - i.e. made to conduct - by applying a negative bias to the gate, and turned "off" with a positive bias. A negative bias induces holes on the tube and makes it conduct. Positive biases, on the other hand, deplete the holes and decrease the conductance. The resistance of the off state can be more than a million times greater that the on state. This behaviour is analogous to that of a p-type metal-oxide-silicon field effect transistor (MOSFET), except that the nanotube replaces silicon as the material that hosts the charge carriers.

Looking at the conductance of semiconducting nanotubes, it can be shown that initially it rises linearly as the gate voltage is reduced, conducting better as more and more holes are added from the electrode to the nanotube. However, the conductance is limited by any barriers that the holes see as they transverse the tube. These barriers may be caused by structural defects in the tube, by atoms absorbed on the tube, or by localized charges near the tube. The holes therefore see a series of peaks and valleys in the potential landscape, through which they must hop if the tube is to conduct. The resistance will be dominated by the highest barriers in the tube. Another disadvantage of the state of the art is that, at lower gate voltages, the conductance eventually stops increasing and becomes constant because the contact resistance between the (metallic) electrodes and the tube can be quite high. Additionally, this contact resistance can vary by several orders of magnitude between devices, probably due to mundane issues such as surface cleanliness. Since charge transport using electrons is mainly diffusive in nature it is strongly subject to thermal noise which, ultimately, leads to efficiency loss in conductance. Furthermore, it is almost impossible to quantify the amount of charge transported by using conventional electrical conductivity.

It is an object of this invention to propose a new electrical conductor at the nano-scale and a method for producing such an electrical conductor which does not exhibit the above-described drawbacks. In particular, it should be possible for the electrical conductor to maintain performance and reliability (e.g. leakage current with other devices on nano-scale, integrability etc.) despite being of nano size. It is a further object of the present invention to permit an Integrated Circuit (IC) to be scaled down properly, maximising the efficiency and speed and minimising the energy consumption of such an IC. In particular it is an object of this invention to propose new nanoscale connectors which provide high, uniform conduction.

These objects are attained according to the present invention through the elements of the independent claims. Further preferred embodiments follow, moreover, from the dependent claims and from the description.

The objects of the invention are also achieved in particular in that an electrical conductor comprises at least one carbon nanotube, the at least one carbon nanotube being filled with a proton-conducting fluid and protons being conductible inside the nanotube by means of an applied external charge gradient as e.g. by changing the redox-state of a appropriate chosen metal, i.e. for example perturbations cased by a laser pulse, or in general by means of an applied electrical voltage. The metal can e.g. be bound as metal cluster to the end cap of the nanotube. The metal cluster (Me) can e.g. be promotable from a neutral state (n,0) to a positively charged state (n+1,+1). This has inter alia the advantage that charge transport is confined to one dimension and therefore can occur in a directional fashion. Additionally, electrical conductors according to the invention can be integrate and/or packed on a very high density, only limmeted by the diameter of the nanotube, since the nanotube-structure acts on the moving proton as a Faraday cage. This is in the state of the art not possible, as the electrons are transproted using the casing of the nanotube itsself, which does not allow a electro-magnetic insulation of the nanotube as conductor.

Further the objects of the invention are also achieved in particular in that a carbon nanotube device comprises at least one support having a conductive element, a carbon nanotube, and a proton conducting fluid inside the nanotube, at least one of whose termini binds to said conductive element at a site, so that conduction between said conductive element and the interior of said nanotube is maintained. This has inter alia the advantage that charge transfer can be initiated at any moment through application of an external perturbation.

In one embodiment the drain proton member of the carbon nanotube device is a countable proton basket. This embodiment has inter alia the advantage that the transferred charge can be used to induce physicochemical changes in the basket (such as release of photons, or a conformational change).

In another embodiment variant, the carbon nanotube device is provided with a plurality of said carbon nanotubes, wherein a root of each of said carbon nanotubes at the site where said carbon nanotubes bind to said conductive element is surrounded by a wall and wherein the binding sites of each of said individual carbon nanotubes are insulated from each other by said wall. This embodiment has inter alia the advantage that the density of charge conductive elements can be dramatically increased since the nanotubes are electrically shielding towards the outside.

The objects of the invention are also achieved in particular in that a carbon nanotube device comprises at least one first carbon nanotube having a bundle of carbon nanotubes coupled to the at least one first carbon nanotube and at least one second carbon nanotube coupled to the bundle, wherein the at least one first carbon nanotube, the bundle of carbon nanotubes and the at least one second carbon nanotube are connected for a conduction path between the at least one first and second carbon nanotubes and wherein the at least one first and second carbon nanotubes are filled with a proton-conducting fluid, protons being conductible inside the nanotubes by means of an applied external charge gradient as e.g. by changing the redox-state of a appropriate chosen metal, i.e. for example perturbations cased by a laser pulse, or in general by means of an applied electrical voltage. The metal can e.g. be bound as metal cluster to the end cap of the nanotube. The metal cluster (Me) can e.g. be promotable from a neutral state (n,0) to a positively charged state (n+1,+1). This has inter alia the advantage that electrical charge can be used in an array where conditional charge transport is possible depending upon the configuration of the bundle of carbon nanotubes. This embodiement opens the possibility for electrical switches at the atomic scale.

The objects of the invention are also achieved in particular in that an integrated circuit comprises a plurality of nanotubes held on a silicon oxide film on the surface of a retaining substrate and a proton conducting material inside the nanotubes. This has inter alia the advantage that the density of charge conducting elements can be considerably increased and IC on a nanoscale become possible.

In one embodiment the integrated circuit comprises nanotubes, at least one of the termini of the nanotubes binding to a conductive element at a site, so that conduction between said conductive element and the interior of said nanotube is maintained. This embodiment has inter alia the advantage that discrete amounts of charge can be released in a specified temporal sequence. Also, true analogue arithmetics can be envisaged through the transfer of discrete charge amounts.

In a further embodiment variant a root of each of said carbon nanotubes at the site where said carbon nanotubes bind to said conductive element is surrounded by a wall and wherein the binding sites of each of said individual carbon nanotubes are insulated from each other by said wall. This embodiment has inter alia the advantage that charge conduction within the nanotube is shielded towards the exterior. This minimizes effects of charge-noise on charge conduction and maximizes efficiency of the device.

In another embodiment variant the integrated circuit comprises nanotubes, wherein at least one of the termini of the nanotubes is connected to a source proton member or a drain proton member. This embodiment has inter alia the advantage that "discrete" or analogue computing becomes possible since charges are transferred in discrete amounts between two well-defined points in space on a short time scale.

In one embodiment said conductive elements form a part of a conductive surface comprising low-resistance silicon. This embodiment has inter alia the same advantages of the prededing embodiments, including that silicon is a very well known and easy adaptable material in the field.

The objects of the invention are also achieved in particular in that a carbon nanotube device comprises a support having a conductive element, a carbon nanotube and a proton conducting fluid inside the nanotube, at least one of whose termini binds to said conductive surface at a site so that the conduction between said conductive element and the interior of said nanotube is maintained, wherein the root of said nanotube at the site where said nanotube binds to said conductive element is surrounded by a wall, said device comprising a formation of a plurality of carbon nanotube binding sites insulated from each other by walls at the site where said nanotube binds to said conductive element. This has inter alia the advantage that more complex functionalities based on charge conduction within an electrically protected (Faraday cage) environment are possible.

The objectives of the invention are also achieved in particular in that a method of manufacturing an integrated circuit comprising a support having a conductive element, a carbon nanotube and a proton conducting fluid inside the nanotube, at least one of whose termini binds to said conductive element at a site so that the conduction between said conductive element and the interior of said nanotube is maintained, said method comprising forming a plurality of carbon nanotube binding sites insulated from each other by surrounding walls at the site where the root of said nanotube binds to said conductive element. Said conductive elements can e.g. form a part of a conductive surface comprising low-resistance silicon, the method therefore comprising the step of forming a narrow hole surrounded by said low-resistance silicon by anodizing the surface of said support. This embodiment has inter alia the same advantages as teh above mentioned embodiments.

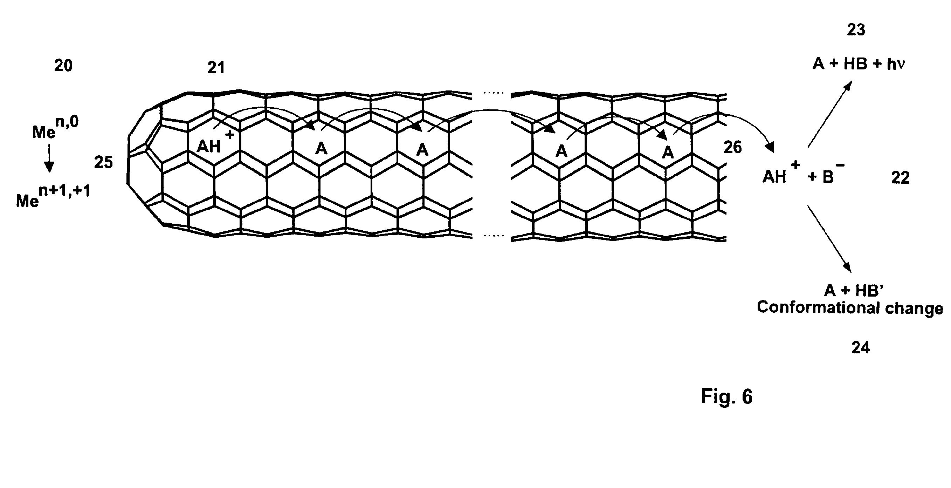

In another embodiment variant, said conductive surface comprises a layer containing at least one element selected from a group consisting of titanium, zirconium, niobium, tantalum, molybdenum, copper, zinc, and iron (see Figure 6 where Me can be any of the above complexed accordingly to further chemical substituents). This embodiment has inter alia the advantage that the source for creating the charge gradient can be tuned in a wide range of wavelengths. In addition, it is possible to realize a variety of bonding patterns depending upon the particular requirements of a realization.

At this point, it should be noted that, in addition to the electrical conductor, the carbon nanotube device and the integrated circuit based on nanotubes according to the invention, the present invention also relates to a manufacturing method for such electrical conductors and/or carbon nanotube devices and/or integrated circuits.

Other features and advantages of the present invention will become apparent from the following description of the invention, which refers to the accompanying drawings. The examples of the embodiments are illustrated by the following enclosed figures:
Figure 1 schematically shows the lattice structure of graphene, as known in the state of the art. Graphene is the two-dimensional material that is rolled up to form a nanotube. The lattice is made up of a honeycomb of carbon atoms.
Figure 2 schematically shows the energy of conducting states in graphene as a function of the wavevector, k, of the electrons. The material does not conduct, except along certain, specific directions where "cones" of states exist.

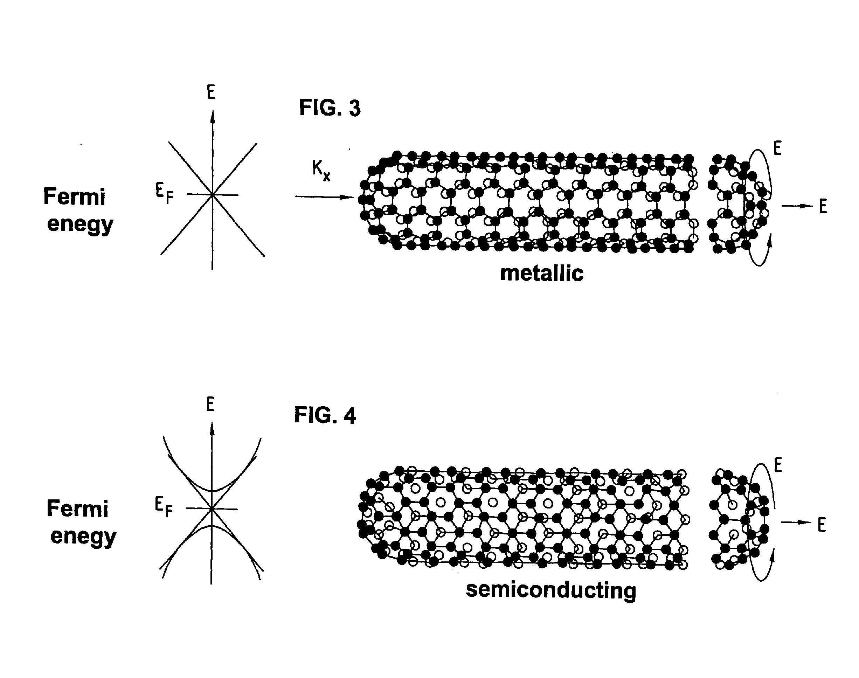

Figure 3 schematically shows a nanotube structure acting as metal, i.e. if the graphene is rolled up around the y axis, the nanotube becomes a metal. The band structure of the nanotube is given by one-dimensional slices through the two-dimensional band structure, as shown in figure 2. The permitted wavevectors are quantized along the axis of the tube.
Figure 4 schematically shows a nanotube structure acting as semiconductor, i.e. if the graphene is rolled up around the x axis, the nanotube becomes a semiconductor. The band structure of the nanotube is given by one-dimensional slices through the two-dimensional band structure, as shown in figure 2. The permitted wavevectors are quantized along the axis of the tube.

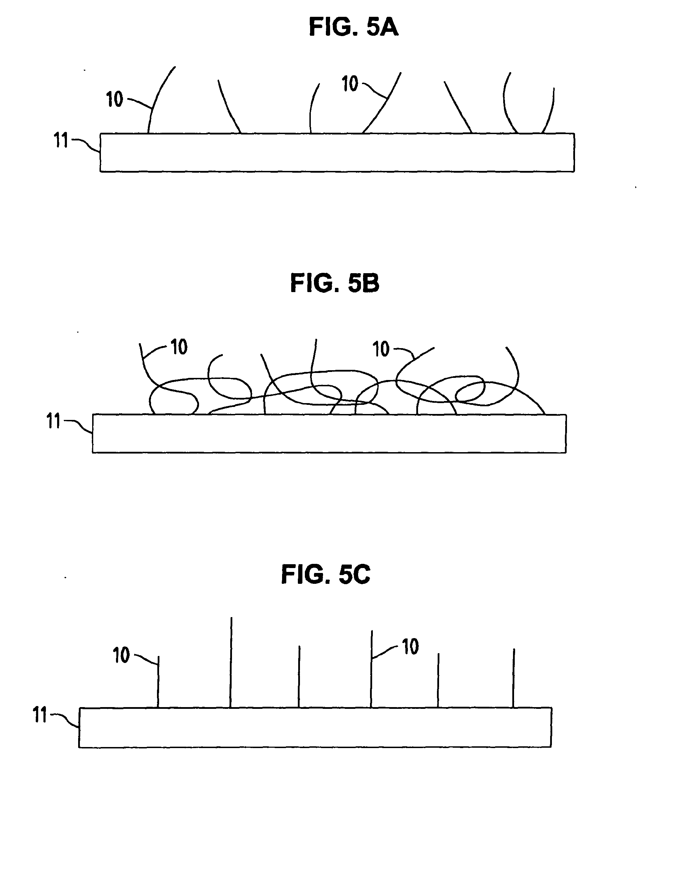

Figure 5 (A-C) schematically illustrates various configurations of nanotubes grown on a substrate.
Figure 6 shows one concrete realization of a nanotube containing a proton conducting fluid (molecules A) including one protonated AH⁺ (position 21). To start the proton transfer cascade the metal cluster Me (position 20) can be promoted from the neutral state (n,0) to the positively charged state (n+1,+1). This cluster is covalently bound the the end cap (position 25) of the nanotube. After propagation of H⁺ along the linear chain A, AH⁺ is available at the end (position 26) of the nanotube. Depending upon the content of the basket (position 22, not drawn for clarity) two possible usages of AH⁺ are illustrated. Light generation (position 22) or mechanical work (position 24). Depending upon the specification of the basket logical instructions can also be triggered by AH⁺.

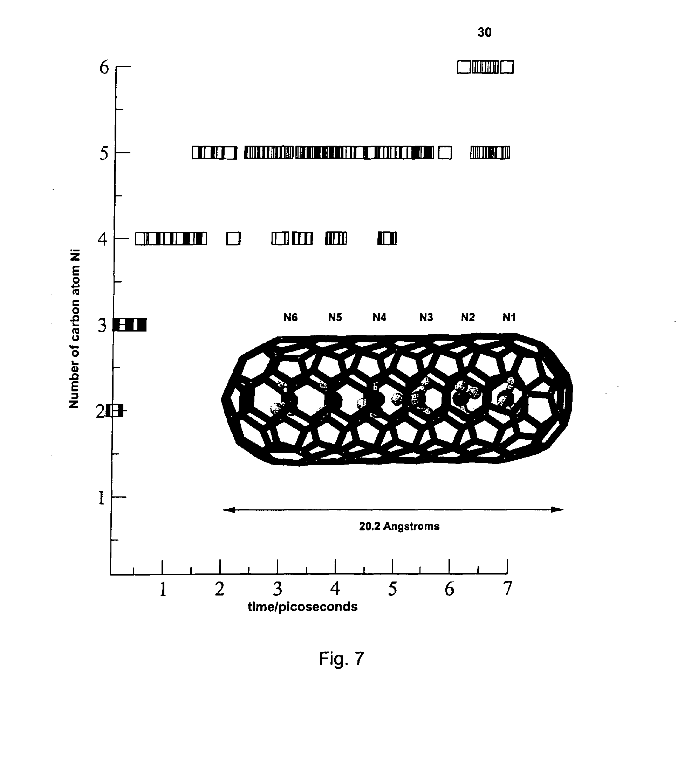

Figure 7 illustrates speed and directionality of the proton transfer along a 6-membered chain of proton conducting ammonia molecules. The ordinate labels the ammonia molecule from right to left, the abscissa gives the time in ps. Initiation of the proton transfer by a positive charge at the end cap (position 25, Figure 6) leads to rapid propagation of the proton along the proton conducting chain. After 6 ps the charge is localized at the other end cap (postion 26/22 Figure 6) where it remains.

Referring now to the drawings, wherein like numerals indicate like elements, Figures 1 up to 7 show carbon nanotubes as used in the embodiments according to the present invention. The presently preferred embodiment of the electrical conductor, comprises at least one carbon nanotube. The at least one carbon nanotube is filled with a proton-conducting fluid, protons being conductible inside the nanotube by means of applied electrical voltage. The proton-conducting fluid can comprise e.g. ammonia, H₂O or any other appropriate proton-conducting fluid with symmetrical proton transfer barriers. The carbon nanotubes can either be closed (two end caps), half open (one end cap) or open (no end caps). End caps are characterized through insertion of pentagons into the regular hexagonal arrangement of the carbon atoms. By means of the present invention it is possible to transport electrical charge in defined quantities (e.g. one unit) from one point in space to another, spatially defined point on a short (picosecond) time scale. This is not possible with electrical conductors based on nanotubes as known from the state of the art, since in the state of the art electrons are used as electrical charges to be moved. However, due to the point like nature of the electron, it is not possible to control the moved electrical charge in quantities such as e.g. one unit. Furthermore charge translocation based on electron transport with carbon nanotubes as shown in the state of the art is typically diffuse (thermal noise). The time scale makes the invention in particular relevant to chip technology in general and the assembly of integrated circuits (ICs) in particular. A carbon nanotube device according to the invention comprises at least one support having a conductive element, a carbon nanotube, and a proton conducting fluid inside the nanotube, at least one of whose termini binds to said conductive element at a site, so that conduction between said conductive element and the interior of said nanotube is maintained. As in IC-technology, the terminus of the nanotubes can e.g. be connected to a source proton member or a drain proton member. The drain proton member can be a countable proton basket, i.e. the protons can be located, kept and/or counted within the proton basket. The basket is a device capable of capturing the AH⁺ and either transferring AH⁺ further or abstracting the proton (H⁺) for further use. Abstraction of the proton requires that the basket itself has a higher proton affinity than the proton conducting fluid. Various organic materials fulfill this requirement, in particular dye molecules. Two possibilities how the protons can be used are illustrated in Figure 6. Either the proton is used in a reaction of the type AH⁺ + B- → A+HB+hν where light with frequency ν is generated. Alternatively, it is possible to induce a conformational change in molecule B upon binding of a proton that leads to mechanical energy. One realization of the basket is a large fullerene that is connected to the open end of the nanotube. This fullerene contains the host molecule B capable of proton uptake. The carbon nanotube device can be further provided with a plurality of said carbon nanotubes, wherein a root of each of said carbon nanotubes at the site where said carbon nanotubes bind to said conductive element is surrounded by a wall and wherein the binding sites of each of said individual carbon nanotubes are insulated from each other by said wall. Finally the carbon nanotube device can comprise at least one first carbon nanotube having a bundle of carbon nanotubes coupled to the at least one first carbon nanotube and at least one second carbon nanotube coupled to the bundle, wherein the at least one first carbon nanotube, the bundle of carbon nanotubes and the at least one second carbon nanotube are connected for a conduction path between the at least one first and second carbon nanotubes and wherein the at least one first and second carbon nanotubes are filled with a proton-conducting fluid, protons being conductible inside the nanotubes by means of applied electrical voltage. As described, carbon nanotubes are regular molecular structures based on carbon. For the embodiments of the present invention single-walled nanotubes (SWNT) are used, while most of the applications and effects described here also apply to multiwalled nanotubes (MWNT). The basic structural elements of carbon nanotubes are hexagons that form the wall of the tube. To understand the invention, it is useful to understand some of the properties of nanotubes and how they are conventionally grown. Nanotubes are tiny conductive tubes with a very small size scale on the order of 1.0-100 nanometres in diameter and 0.5-10 µm in length. Carbon nanotubes are representative. Their structure and fabrication are reported e.g. in J. Liu et al., Science, Vol. 280, p. 1253 (1998); Z. F. Ren et al., *Science,* Vol. 282, p. 1105 (1998); W. Z. Li, et al., *Science,* Vol. 274, p. 1701 (1996); S. Frank et al., *Science,* Vol. 280, p. 1744 (1998); S. J. Tans et al., *Nature*, Vol. 36, p. 474 (1997); S. Fan, et al., *Science,* Vol. 283, p. 512 (1999); P. G. Collins et al., *Science,* Vol. 278, p. 100 (1997); J. Kong et al., *Nature,* Vol. 395, p. 878 (1998); and T. W. Ebbesen et al., *Nature*, Vol. 382, p. 54 (1996), the contents of all of which are incorporated herein by reference. The synthesis of nanotubes based on semiconductor materials such as Si or Ge has also been reported. See, for example, A. M. Morales et al., Science, Vol. 279, p. 208 (1998), the contents of which are incorporated herein by reference. Carbon nanotubes exhibit unique atomic arrangements, having useful physical properties such as one-dimensional electrical behaviour, quantum conductance, and ballistic electron transport. The ballistic transport in carbon nanotubes, as reported by Frank et al, permits the passage of huge electrical currents, with the magnitude of current density comparable to, or better than, those in superconductors. Therefore, since nanotubes are like tiny conductive tubes, they act as a Faraday cage for a charge sitting or being transported inside the nanotube. This property allows the nanotubes to be assembled at a high density, without having the proton current within the nanotubes interfering with each other. On the contrary, in the state of the art, the electrons are transported using the walls of the nanotubes. Therefore, in close proximity, the nanotubes will electromagnetically interfere, causing unwanted and disturbing physical effects such as e.g. leaking currents, etc., while limiting the integration ability of the nanotubes as electrical conductors. The carbon nanotubes are among the smallest dimensioned nanotubes, materials with generally high aspect ratio and small diameter of about 1.0 nm in the case of single-wall nanotubes, and less than about 50 nm in the case of multiwall nanotubes. See A. G. Rinzler et al, *Applied Physics,* Vol. A67, p. 29 (1998); Kiang et al, *J. Physical Chemistry,* Vol. 98, p. 6612, (1994); and Kiang et al, *Physical Review Letters,* Vol. 81, p. 1869 (1998), the contents of which are incorporated herein by reference. Therefore, an integration of the electrical conductors according to the invention on an atomic level is possible without having the conductors interfering with each other.

High quality single-walled carbon nanotubes are typically grown as randomly oriented, needle-like or spaghetti-like, tangled tubules. According to the invention they can e.g. be grown by chemical vapour deposition (CVD), laser ablation or electric arc growth. CVD methods such as used by Ren et al., Fan et al., and Li et al can produce multiwall nanotubes attached onto a substrate, often with aligned, parallel growth perpendicular to the substrate. The carbon nanotubes can e.g. also be grown on a substrate by catalytic decomposition of hydrocarbon-containing precursors such as ethylene, methane, or benzene. Nucleation layers, such as thin coatings of Ni, Co, or Fe, are often intentionally added onto the substrate surface in order to nucleate a multiplicity of insulated nanotubes. Further the carbon nanotubes can also be nucleated and grown on a substrate without a metal nucleating layer, by using a precursor including one or more of these metal atoms. During CVD the metal atoms serve to nucleate the nanotubes on the substrate surface. See H. M. Cheng et al., *Chem. Physics Letters,* Vol. 289, p. 602 (1998), the contents of which are incorporated herein by reference. Semiconductor or conductor nanotubes are grown on substrates by similar processes. Referring to the drawings, Figures 5 (a)-(c) schematically illustrate various configurations of nanoconductors 10 according to the invention grown on a substrate 11. The nanoconductors 10 can be carbon nanotubes synthesized by any one of a variety of methods. In the absence of alignment processing, the nanotubes tend to grow with the random orientation morphology shown in Figure 1(a) or with the tangled growth morphology shown in Figure 1(b). Such a tangled morphology of nanotubes is also obtained in laser ablation synthesis. By using CVD growth in the presence of an applied electric field, a vapour concentration gradient, a temperature gradient, or recessed pores containing catalysts in the substrate, the nanotubes can be grown with an aligned morphology substantially perpendicular to the substrate. Such aligned nanotubes 10 are schematically illustrated in Figure 1 (c).

It can be preferable for the nanotubes according to the inventionto be provided as a collection of free-standing nanoconductors, so that they can be placed and bonded for circuit interconnections. They can be of approximately equal length to avoid unwanted short circuits from connectors that are too long and unwanted open circuits from connectors that are too short. For making a collection of free-standing nanotubes of controlled, substantially equal length, a removable substrate for nanotube growth can be provided in a first step, for example . The substrate can be e.g. removable by dissolving in water or another solvent. The substrate can be a sodium chloride crystal or another water-soluble material. Acid-dissolvable metals such Cu, Ni, Co, Mo, Fe, V, Au, Ag, and their alloys, or base-dissolvable metals such as Al may also be used. Or the substrate can be made of a soluble polymer such as polyvinyl alcohol, polyvinyl acetate, polyacrylamide, acrylonitrile-butadiene-styrene. Alternatively, the removable substrate can be a volatile (evaporable) material such as PMMA polymer. The removable substrate can e.g. be a layered combination of metals or compounds. For example, a solvent-soluble material such as polyacrylamide or an acid-soluble metal such as Cu can be coated with a thin film of nucleating material for nanotubes growth and used as a substrate during CVD growth. The coating can e.g. be a catalyst metal such as Ni, Fe or Co, and can be deposited as a continuous, spotty or patterned film by sputtering, vacuum evaporation or electrochemical deposition. In a next step aligned nanotubes can be grown on the removable substrate. For example, aligned carbon nanotubes can be grown using CVD growth in the direction of an applied electric field, vapour concentration gradient, temperature gradient, or recessed pores in the substrate to produce aligned nanotubes as discussed in Ren et al., Fan et al. and Li et al. Aligned nanoconductors 10 on a substrate 11 are schematically illustrated in Figure 5 (c). It can be reasonable for the average deviation from vertical growth to be less than 25 degrees and preferably less than 15 degrees.

Finally, in a third step, it is possible to equalize the lengths of the grown nanoconductors. Ideally, length equality is achieved by careful growth, but equal length growth is difficult to achieve in practice. Figure 6 schematically illustrates equal length, aligned nanoconductors 10 on a removable substrate 11. For aligned nanoconductors grown on a substrate with non-uniform lengths, it is, for example, possible in the third step to achieve length-equalization by adding to the substrate a sacrificial layer of uniform thickness which will bury the nanoconductors to an equal height level while leaving exposed the nanoconductor material beyond the desired length. Such a sacrificial locking layer temporarily protects the buried nanoconductor regions while the exposed extra length regions are removed. The sacrificial layer can e.g. be a material that can be relatively easily removed after the length equalization, i.e., by dissolving in water or in a solvent, by chemically or electrochemically etching, or by vaporizing through heating. Exemplary sacrificial layer materials include water-soluble or solvent-soluble salts such as sodium chloride, silver chloride, potassium nitrate, copper sulphate, and indium chloride, or soluble organic materials such as sugar and glucose. The sacrificial layer material can also be a chemically etchable metal or alloy such as Cu, Ni, Fe, Co, Mo, V, Al, Zn, In, Ag, Cu--Ni alloy, Ni--Fe alloy and others. These materials can be dissolved in an acid such as hydrochloric acid, aqua regia, or nitric acid, or can be dissolved away in a base solution such as sodium hydroxide or ammonia. The sacrificial layer may also be a vaporizable material such as Zn which can be decomposed or burned away by heat. The sacrificial layer can e.g. be added by chemical deposition such as electroplating or electroless plating, by physical vapour deposition such as sputtering, evaporation, laser ablation, ion beam deposition, or by chemical vapour decomposition. It is also possible to electroplate in an electrolyte containing the ions of a metal to be deposited, e.g., Ni from a NiSO.sub.4 solution or Cu from a CuSO.sub.4 -containing solution. The substrate 11 can have a catalyst metal coating such as Ni, Co, or Fe. The electrodeposition of the metal preferentially occurs on the catalyst metal coating rather than on the nanotubes because of chemical affinity. As is well known, the thickness of the electroplated metal is controlled by the processing variables such as the time, temperature, electrolyte concentration, and current density. The thickness of the uniformly deposited sacrificial layer determines the nanoconductor length. For interconnection applications, the desired average length (region 10A) is typically in the range of 10-10,000 nm. Preferably the lengths of at least 90% of the nanoconductors should not deviate more than 20% from the average length.

In a next step of the equalization process, the exposed portions 10B of the nanotubes can be are removed. In the case of carbon nanotubes, the exposed portion can be burned away by heating in an oxidizing atmosphere at temperatures in the range of 200-1000° C. The exposed portion 10B can also be removed by mechanical polishing or chemical etching so that only their buried, equal-length part 10A remains. The step of length equalization may also be achieved by alternative methods without employing a sacrificial layer. For example, equalization can be achieved by laser cutting or hot blade cutting, as disclosed in U.S. patent application Serial No. 09/236,933, filed by S. Jin on January 25, 1999, and entitled "Article Comprising Aligned Truncated Carbon Nanotubes," the contents of which are incorporated herein by reference. In a next step in the process, it is e.g. possible to remove the substrate. This includes removing any sacrificial layers used in the length equalization process and any catalyst metal film added for nanoconductor nucleation. Removal can be obtained by dissolving the substrate materials, and the particular solvent used depends on the materials. The workpiece comprising the substrate 11 and the equal height nanotubes 10A can e.g. be placed in a bath of solvent. The result of this step is a collection of free-standing, equal length nanoconductors. They typically have diameters averaging less than 100 nm, and the lengths of at least 90% of the nanoconductors in the collection do not deviate by more than 20 percent from the average length. The free-standing, equal-length nanotubes obtained can be dispersed in liquid or functionalized and dissolved in liquid so that the collection remains separated without agglomeration. Carbon nanotubes allow various chemical modifications of their open ends, outside walls, or the tube-interior cavity by functionalization chemistry. For example, single-wall carbon nanotubes can be made soluble in common organic solvents, such as chloroform, dichloromethane, toluene, CS₂, chlorobenzene, etc., by attaching long-chain molecules such as octadecylamin, NH(CH₂).sub.17 CH₃, to the open ends of the nanotubes. This can be accomplished via formation of amide functionality. For specific application it can be reasonable to induce modification of the electronic bandgap structure (and hence the electrical properties) of the nanotube wall, for example, by dichlorocarbene covalent bonding onto nanotube walls. See J. Chen et al., *Science,* Vol. 282, p.95, (1998); J. Chen et al., *Journal of Materials Research,* Vol. 13, p. 2423 (1998); and J. Liu et al., *Science,* Vol. 280, p. 1253 (1998), the contents of which are incorporated herein by reference.

The free-standing, equal-length dispersed nanotubes can be applied to an electronic circuit and for interconnection and bonding. The nanotubes 10A can also be placed on circuit pads by individual micro-manipulation or nano-manipulation under a high resolution microscope. Alternatively, the nanotubes 10A are placed by random dropping such as by sedimentation from a thin layer of solution. Because of the equal-length of the nanotubes without undesirably long nanotubes, unwanted electrical shorting is avoided. The nanotubes 10A are then dried and bonded onto the underlying pads, such as by soldering. The pad surface can be pre-coated with a solder layer and heated together with the contacting nanotubes. The device surface can then be washed to remove non-bonded nanotubes. The sedimentation and the solder bonding process can be repeated until all the desired electrical interconnections between adjacent contact pads are obtained.

As an embodiment, the electrical conductor of a plurality of such electrical conductors according to the invention can e.g. be used in an integrated circuit, which comprises a plurality of nanotubes held on a silicon oxide film on the surface of a retaining substrate and a proton conducting material inside the nanotubes. At least one of the termini of the nanotubes can e.g. bind to a conductive element at a site, so that conduction between said conductive element and the interior of said nanotube is maintained. Further, a root of each of the carbon nanotubes at the site where said carbon nanotubes bind to said conductive element can be surrounded by a wall, and the binding sites of each of said individual carbon nanotubes are insulated from each other by said wall. At least one of the termini of the nanotubes can e.g. also be connected to a source proton member or a drain proton member. In the integrated circuit according to an embodiment of the invention, the conductive elements can e.g. form a part of a conductive surface comprising low-resistance silicon. A plurality of carbon nanotube binding sites can e.g. be formed, which are insulated from each other by surrounding walls at the site where the root of said nanotube binds to said conductive element, as mentioned. Further, a narrow hole can e.g. be formed surrounded by said low-resistance silicon by anodizing the surface of said support. The conductive surface can e.g. comprise a layer containing at least one element selected from a group consisting of titanium, zirconium, niobium, tantalum, molybdenum, copper and zinc.

Therefore, as shown, nanotubes according to the invention provide a highly integrated environment to conduct charges, and do not have the physical limitations of today's IC technology. Furthermore, with electrons, flip/flop technology is limited by yes/no. Analogue problems are difficult to formulate with current technologies. With carbon nanotube devices according to the invention, it is easy to create non binary and/or quasi-analogous devices, which are reasonable in many modern technological fields as expert systems or fuzzy logic. However, note that also other procedures to synthesize devices composed of an assembly of nanotubes according to the invention can be used (see e.g. M.S. Dresselhaus, G. Dresselhaus, and P. Avouris, *Carbon Nanotubes: Synthesis, Structure, Properties, and Applications,* Springer-Verlag, 2001, or S. lijima and T. Ichihashi, *Nature* 363, 603, 1993). Different nanotubes according to the invention can e.g. also be connected to form three-terminal nanotubes. For the systematic and controlled production of SWNT, it is also possible to use methods other than as described above (see e.g. M.S. Dresselhaus, G. Dresselhaus, and P. Avouris, *Carbon Nanotubes: Synthesis, Structure, Properties, and Applications,* Springer-Verlag, 2001) A SWNT, which is typically characterized by diameters between 1 and 2 nm (10 to 20 Angstroms) and maximal lengths up to millimetres have been reached recently also e.g. by methods according to S. Huang, B. Maynor, X. Cai, and J. Liu, *Adv. Mater*. 15, 1651, 2003. Other methods for providing arrays of aligned and micro structured nanotubes have also been discussed in the recent literature. (see e.g. L. Dai, A. Patil, X. Gong, Z. Guo, L. Liu, Z. Liu, and D. Zhu, *Comput. Phys. Commun*. 4, 1150, 2003). One way to achieve this is to grow SWNT wires between controlled surface sites by catalyst patterning which leads to a variety of interconnecting SWNT architectures. Other structures include sets of parallel SWNTs on substrates and a set of perpendicular SWNTs suspended above the first layer which forms a crisscrossing nanotube network. Such device elements have been shown to work as ON/OFF switches using electrons as charge carriers. They also have been discussed as reversible, bistable nanotube device elements to construct nonvolatile random access memory (RAM) and to perform logic function.

It is to be understood that the above-described embodiments are illustrative of only a few of the many possible specific embodiments which can represent applications of the principles of the invention. Numerous and varied other arrangements can be readily devised by those skilled in the art without departing from the spirit and scope of the invention.

## Claims

1. Electrical conductor, comprising at least one carbon nanotube, **characterised in**
**that** at least one carbon nanotube is filled with a proton-conducting fluid, protons being conductible inside the nanotube by means of an applied external charge gradient.

2. Electrical conductor according to claim 1, wherein the electrical conductor comprises at least one metal cluster (Me) which is bound to one of the end caps of the at least one nanotube having a changeable redox-state.

3. Electrical conductor according to claim 2, wherein the redox-state is changeable by means of a laser pulse.

4. Electrical conductor according to the claim 1, wherein the electrical conductor comprises a metal cluster (Me) which is bound to one of the end caps of the at least one nanotube being promotable from a neutral state (n,0) to a positively charged state (n+1,+1).

5. A carbon nanotube device comprising at least one support having a conductive element, a carbon nanotube, and a proton conducting fluid inside the nanotube, at least one of whose termini binds to said conductive element at a site, so that conduction between said conductive element and the interior of said nanotube is maintained.

6. Carbon nanotube device according to claim 5, wherein at least one of whose termini is connected to a source proton member or a drain proton member.

7. Carbon nanotube device according to claim 6, wherein the drain proton member is a countable proton basket.

8. Carbon nanotube device according to one of the claims 6 or 7, wherein said device is provided with a plurality of said carbon nanotubes, wherein a root of each of said carbon nanotubes at the site where said carbon nanotubes bind to said conductive element is surrounded by a wall and wherein the binding sites of each of said individual carbon nanotubes are insulated from each other by said wall.

9. Carbon nanotube device, comprising at least one first carbon nanotube having a bundle of carbon nanotubes coupled to the at least one first carbon nanotube and at least one second carbon nanotube coupled to the bundle, wherein the at least one first carbon nanotube, the bundle of carbon nanotubes and the at least one second carbon nanotube are connected for a conduction path between the at least one first and second carbon nanotubes and wherein the at least one first and second carbon nanotubes are filled with a proton-conducting fluid, protons being conductible inside the nanotubes by means of an applied external charge gradient.

10. Carbon nanotube device according to claim 9, wherein the carbon nanotube device comprises at least one metal cluster (Me) which is bound to one of the end caps of the at least one first and/or second nanotube having a changeable redox-state.

11. Carbon nanotube device according to claim 10, wherein the redox-state is changeable by means of a laser pulse.

12. Carbon nanotube device according to the claim 9, wherein the electrical conductor comprises a metal cluster (Me) which is bound to one of the end caps of the nanotube being promotable from a neutral state (n,0) to a positively charged state (n+1,+1).

13. Integrated circuit, comprising a plurality of nanotubes held on a silicon oxide film on the surface of a retaining substrate and a proton conducting material inside the nanotubes.

14. Integrated circuit according to claim 13, wherein at least one of the termini of the nanotubes binds to a conductive element at a site, so that conduction between said conductive element and the interior of said nanotube is maintained.

15. Integrated circuit according to claim 14, wherein a root of each of said carbon nanotubes at the site where said carbon nanotubes bind to said conductive element is surrounded by a wall and wherein the binding sites of each of said individual carbon nanotubes are insulated from each other by said wall.

16. Integrated circuit according to one of the claims 13 to 15, wherein at least one of the termini of the nanotubes is connected to a source proton member or a drain proton member.

17. Integrated circuit according to one of the claims 13 to 16, wherein said conductive elements form a part of a conductive surface comprising low-resistance silicon.

18. A method of manufacturing a carbon nanotube device comprising a support having a conductive element, a carbon nanotube and a proton conducting fluid inside the nanotube, at least one of whose termini binds to said conductive surface at a site so that the conduction between said conductive element and the interior of said nanotube is maintained, wherein the root of said nanotube at the site where said nanotube binds to said conductive element is surrounded by a wall, said method comprising the step of:
forming a plurality of carbon nanotube binding sites insulated from each other by walls at the site where said nanotube binds to said conductive element.

19. A method of manufacturing an integrated circuit comprising a support having a conductive element, a carbon nanotube and a proton conducting fluid inside the nanotube, at least one of whose termini binds to said conductive element at a site so that the conduction between said conductive element and the interior of said nanotube is maintained, said method comprising the step of:
forming a plurality of carbon nanotube binding sites insulated from each other by surrounding walls at the site where the root of said nanotube binds to said conductive element.

20. Manufacturing method according to claim 19, wherein said conductive elements form a part of a conductive surface comprising low-resistance silicon, the method further comprising the step:
forming a narrow hole surrounded by said low-resistance silicon by anodizing the surface of said support.

21. Manufacturing method according to one of the claims 19 or 20, wherein said conductive surface comprises a layer containing at least one element selected from a group consisting of titanium, zirconium, niobium, tantalum, molybdenum, copper and zinc.
